# EUROPÄISCHE PATENTSCHRIFT

(11) **EP 3 186 104 B1**
(45) Veröffentlichungstag und Bekanntmachung des Hinweises auf die Patenterteilung: **24.06.2020**
(21) Anmeldenummer: 15738020.5
(22) Anmeldetag: 08.07.2015
(51) Int. Cl.: B60K 26/02

(54) **AKTIVES FAHRPEDAL MIT FREIWEG**
ACTIVE ACCELERATOR PEDAL COMPRISING A FREE PATH
PÉDALE D'ACCÉLÉRATEUR ACTIVE À TRAJET LIBRE

(30) Priorität: 29.08.2014 DE 102014217327
(43) Veröffentlichungstag der Anmeldung: 05.07.2017
(73) Patentinhaber: Robert Bosch GmbH, 70442 Stuttgart (DE)
(72) Erfinder: HLAVKA, Milos, 37312 Borovany (CZ)
(86) Internationale Anmeldenummer: PCT/EP2015/065592
(87) Internationale Veröffentlichungsnummer: WO 2016/030068

(56) Entgegenhaltungen:
- US-A1- 2012 169 488
- US-A1- 2014 238 181

## Beschreibung

### Stand der Technik

Die vorliegende Erfindung betrifft ein aktives Fahrpedal eines Fahrzeugs mit einem Freiweg, bevor das aktive Fahrpedal einer Pedalkraft eine Gegenkraft entgegensetzt.

Um Fahrern haptische Rückmeldungen über Fahrzeugzustände und Zustandsänderungen zu geben, zum Hinweis auf Gefahren oder zum Hinweis auf ein verbrauchsoptimiertes Fahren, können Pedale des Fahrzeugs verwendet werden. Die Rückmeldungen können beispielsweise als Gegenkraft am Pedal aufgebracht werden und abhängig von einer Situation verschiedene Ausgestaltungsformen, z.B. pulsierend oder vibrierend oder als Kraftschwelle, annehmen. Eine auf das Pedal auszuübende Gegenkraft liegt dabei im Bereich von 10 bis 15 N, wobei in bestimmten Situationen die Gegenkraft auch dauerhaft aufzubringen ist. Aus der DE 102011054655 A1 ist beispielsweise ein aktives Fahrpedal bekannt, bei dem die Gegenkraft mittels eines Elektromotors aufgebracht wird und über ein schräg verzahntes Getriebe auf das Pedal übertragen wird. Dieses aktive Fahrpedal nimmt jedoch durch diese Ausgestaltung einen sehr großen Bauraum ein. Insbesondere im Fußraum eines Fahrzeugs ist Bauraum jedoch begrenzt und sollte möglichst effektiv eingesetzt werden.

Aus der US 2012 / 0 169 488 A1 ist ein Haptisches Fahrpedal bekannt.

Aus der US 2014/0238 181 A1 ist ein haptisches Gaspedal bekannt.

### Offenbarung der Erfindung

Das erfindungsgemäße aktive Fahrpedal eines Fahrzeugs mit den Merkmalen des Anspruchs 1 weist demgegenüber den Vorteil auf, dass durch Vorsehen eines Freiwegs vor der Erzeugung einer Gegenkraft eine vorbestimmte Verzögerung in Abhängigkeit einer Länge des Freiwegs bereitgestellt werden kann. Hierdurch können, z.B. für verschiedene Fahrzeughersteller, unterschiedliche Ansprechverhalten des aktiven Fahrzeugfahrpedals einfach realisiert werden. Diese können auf einfache Weise durch unterschiedliche Einstellungen einer Länge des Freiwegs bereitgestellt werden. Somit können insbesondere für verschiedene Fahrzeughersteller unterschiedliche aktive Fahrpedale auf einfache Weise mit unterschiedlichen Ansprechverhalten realisiert werden. Dies wird erfindungsgemäß durch Vorsehen des Freiweges zwischen einer Aktuatoreinheit und einer Pedaleinheit erreicht. Auch bei verschiedenen Wünschen eines Fahrers, wie z.B. ökonomisches Fahren oder sportliches Fahren, kann durch Änderung des Freiwegs im aktiven Fahrpedal die jeweilige Ansprechkennlinie verändert werden.

Die Unteransprüche zeigen bevorzugte Weiterbildungen der Erfindung.

Weiter bevorzugt umfasst das aktive Fahrpedal einen ersten und zweiten Wegsensor. Der erste Wegsensor bestimmt dabei eine Position eines bewegbaren Bauteils der Aktuatoreinheit und der zweite Wegsensor bestimmt eine Position des Pedals der Pedaleinheit. Da die Wegpositionen proportional zur gewünschten erzeugten Gegenkraft sind, kann somit eine Krafteinstellung der Gegenkraft auf eine reine Positionsregelung zurückgeführt werden. Dadurch kann eine Steuereinheit des aktiven Fahrpedals sehr einfach und kostengünstig ausgeführt werden. Ferner können statt Kraftsensoren kostengünstige und robuste Wegsensoren verwendet werden.

Gemäß der Erfindung umfasst das aktive Fahrpedal ein Getriebe, welches zwischen Pedaleinheit und der Aktuatoreinheit angeordnet ist. Das Getriebe ist ein Schneckengetriebe. Das Schneckengetriebe ist besonders bevorzugt einstufig mit genau einer Schnecke und genau einem angetriebenen Schneckenelement ausgebildet. Das angetrieben Schneckenelement ist vorzugsweise ein Schneckenrad oder eine Schnecken-Zahnstange.

Wenn das angetriebene Schneckenelement ein Schneckenrad ist, fällt vorzugsweise eine Schwenkachse des Pedals mit einer Mittelachse des Schneckenrades zusammen. Hierdurch kann ein besonders kompakter und einfacher Aufbau realisiert werden.

Gemäß einer weiteren bevorzugten Ausgestaltung der vorliegenden Erfindung umfasst das aktive Fahrpedal ferner ein Federelement, welches in Wirkverbindung zwischen der Pedaleinheit und der Aktuatoreinheit angeordnet ist. Das Federelement kann dabei eine zusätzliche Kraft aufbringen, welche sich zusammen mit der von der Aktuatoreinheit aufgebrachten Kraft zur gewünschten Gegenkraft addiert. Das Federelement ist bevorzugt eine Druckfeder oder alternativ eine Torsionsfeder. Ein weiterer Vorteil des Federelements liegt darin, dass das Federelement Schwingungen aufnehmen kann und somit dämpfende Eigenschaften aufweist, so dass ein Fahrer am Pedal keine unerwünschten Vibrationen oder dergleichen wahrnimmt.

Weiter bevorzugt umfasst das Federelement ein Federende, welches nach Zurücklegen des Freiweges eine Kopplung zwischen der Pedaleinheit und der Aktuatoreinheit bewirkt. Das Federende kann beispielsweise mit einem Anschlag an der Aktuatoreinheit oder der Pedaleinheit in Kontakt kommen und so die Kopplung zwischen den beiden Einheiten bewirken.

Weiter bevorzugt ist eine Länge des Freiweges einstellbar. Dies kann beispielsweise dadurch erreicht werden, dass die Aktuatoreinheit ein bewegbares Bauteil, welche für eine Kopplung mit der Pedaleinheit eingerichtet ist, an unterschiedlichen Startpositionen positionieren kann. Die Verstellung des Freiweges kann somit während des Betriebs des aktiven Fahrpedals vorgenommen werden. Weiterhin können auch durch eine entsprechende Programmierung der Steuereinheit für unterschiedliche Fahrzeughersteller unterschiedliche Freiwege durch Änderung der jeweiligen Startposition der Aktuatoreinheit ermöglicht werden oder der Freiweg während des Betriebs des Fahrzeugs verändert werden. Alternativ kann auch eine Längenänderung des Freiweges z.B. durch Vorsehen von unterschiedlich langen Langlöchern oder Aussparungen realisiert werden.

Besonders bevorzugt ist das angetriebene Schneckenelement des Schneckengetriebes in einem Gehäuse der Pedaleinheit angeordnet. Hierdurch wird ein besonders kompakter Aufbau erreicht. Das Gehäuse weist dabei besonders bevorzugt ein Fenster auf, durch welches die Schnecke mit dem Schneckenelement kämmt. Hierdurch kann eine Kompaktheit des aktiven Fahrpedals weiter erhöht werden.

Weiter bevorzugt weist das Schneckengetriebe als angetriebenes Schneckenelement ein Schneckenrad mit einer Innenverzahnung auf, wobei die Schnecke im Inneren des Schneckenrads angeordnet ist. Hierdurch wird ein noch kompakterer Aufbau erreicht.

Gemäß einer weiteren bevorzugten Ausgestaltung der Erfindung wird die Gegenkraft auf die Pedaleinheit mittels eines ersten und zweiten Anschlags übertragen. Zur Dämpfung kann hierbei an einem oder beiden Anschlägen jeweils noch ein Elastomerelement oder dergleichen vorgesehen werden.

Vorzugsweise umfasst das Fahrpedal ferner eine Steuereinheit zur Betätigung der Aktuatoreinheit, wobei die Aktuatoreinheit eingerichtet ist, basierend auf Signalen der Steuereinheit, einer auf das Pedal ausgeübten Pedalkraft eine Gegenkraft entgegenzusetzen.

### Zeichnung

Nachfolgend werden bevorzugte Ausführungsbeispiele der Erfindung unter Bezugnahme auf die begleitende Zeichnung im Detail beschrieben. Gleiche bzw. funktional gleiche Teile sind jeweils mit den gleichen Bezugszeichen bezeichnet. In der Zeichnung ist:
- Figur 1: eine schematische Explosionsdarstellung eines aktiven Fahrpedals gemäß einem ersten Ausführungsbeispiel der Erfindung,
- Figur 2: eine Schnittansicht des Fahrpedals von Figur 1,
- Figur 3: eine schematische Ansicht eines aktiven Fahrpedals gemäß einem zweiten Ausführungsbeispiel der Erfindung,
- Figur 4: eine schematische Draufsicht des Fahrpedals von Figur 3, und
- Figur 5: eine schematische Ansicht eines aktiven Fahrpedals gemäß einem dritten Ausführungsbeispiel der Erfindung.

### Bevorzugte Ausführungsformen der Erfindung

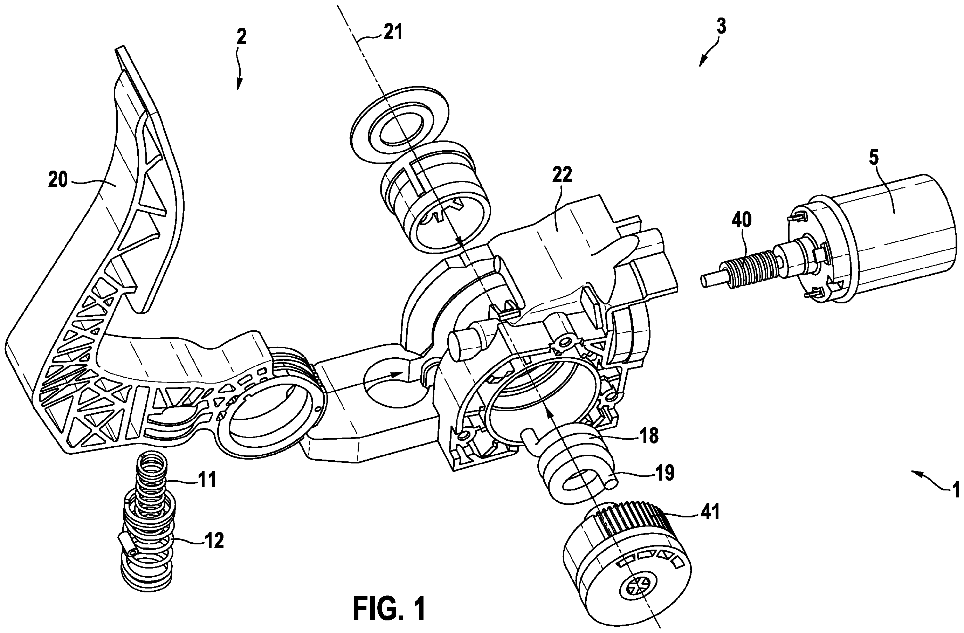

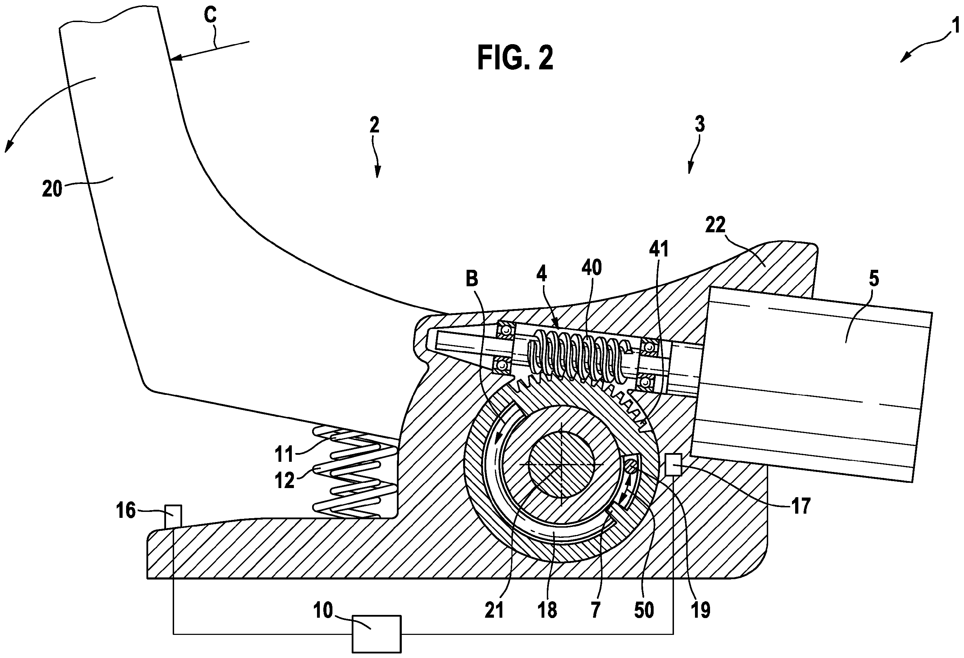

Nachfolgend wird unter Bezugnahme auf die Figuren 1 und 2 ein aktives Fahrpedal 1 gemäß einem ersten bevorzugten Ausführungsbeispiel der Erfindung im Detail beschrieben.

Wie aus den Figuren 1 und 2 ersichtlich ist, umfasst das aktive Fahrpedal 1 eine Pedaleinheit 2 und eine Aktuatoreinheit 3.

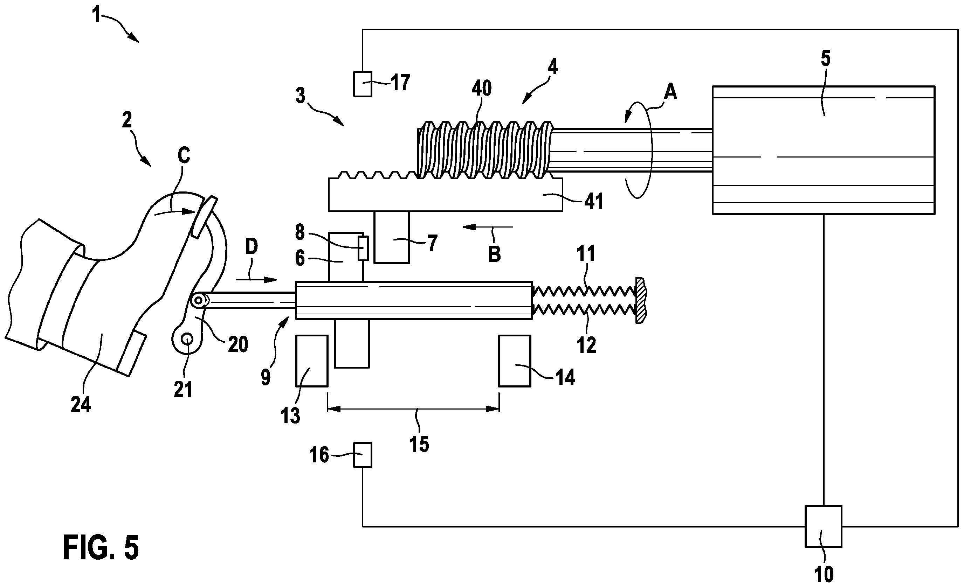

Die Pedaleinheit 2 umfasst ein Pedal 20, welches mittels eines Fußes 24 (siehe Fig. 5) betätigbar ist (Pfeil C). Das Pedal kann jedoch auch mittels eines anderen Gliedmaßes eines Fahrers, z.B. einer Hand betätigt werden. Auch kann ein Roboter als "Fahrer" fungieren, wobei der Roboter Sensoren zur Gegenkrafterkennung aufweisen kann. Das Pedal ist um eine Schwenkachse 21 schwenkbar. In diesem Ausführungsbeispiel ist das Pedal ein stehendes Pedal, es kann jedoch auch ein hängendes Pedal verwendet werden.

Das Pedal 20 wird mittels eines ersten und zweiten Rückstellelements 11, 12, welche aus Sicherheitsgründen redundant vorgesehen sind, in die in Figur 2 gezeigte Ausgangsposition zurückgestellt.

Die Aktuatoreinheit 3 umfasst einen Antrieb 5 sowie ein Schneckengetriebe 4. Das Schneckengetriebe 4 ist einstufig ausgebildet und umfasst eine Schnecke 40 sowie ein Schneckenrad 41. Das Schneckenrad 41 ist das angetriebene Schneckenelement und ist koaxial zur Schwenkachse 21 des Pedals 20 angeordnet.

Weiterhin ist ein erster Wegsensor 16 und ein zweiter Wegsensor 17 vorgesehen. Der erste Wegsensor 16 erfasst eine Position des Pedals 20 und der zweite Wegsensor 17 erfasst eine Position eines bewegbaren Bauteils des Aktuators 3, in diesem Ausführungsbeispiel eine Position des Schneckenrads 41.

In Wirkverbindung zwischen der Pedaleinheit 2 und der Aktuatoreinheit 3 ist ein Federelement 18 vorgesehen (vergleiche Figur 1). Das Federelement 18 ist eine zylindrische Torsionsfeder und dient als Koppelelement zwischen der Pedaleinheit 2 und der Aktuatoreinheit 3. Ein Federende 19 des Federelements 18 ist dabei derart angeordnet, dass erst nach Zurücklegen eines Freiwegs 50 das Federende 19 mit einem Anschlag 7 am Schneckenrad 41 in Kontakt kommt (vergleiche Figur 2). Hierdurch wird ein erfindungsgemäßer Freiweg realisiert, welcher sicherstellt, dass bei einer Betätigung der Aktuatoreinheit 3 nicht sofort eine Gegenkraft gegen eine vom Fahrer auf das Pedal 20 ausgeübten Pedalkraft (Pfeil C) bereitgestellt wird. Erst nach Zurücklegen des Freiwegs 50 baut sich die Gegenkraft auf. Durch die Verwendung des koppelnden Federelements 18 wird die Gegenkraft als Summe einer Federkraft sowie einer durch den Antrieb und das Schneckengetriebe 4 erzeugten Kraft bereitgestellt.

Somit kann durch Anordnung des Anschlags 7 am Schneckenrad 41 eine Länge des Freiwegs 50 bestimmt werden. Hierbei können beispielsweise für unterschiedliche Fahrzeughersteller unterschiedliche Schneckenräder mit verschiedensten Positionen des Anschlags 7 bereitgestellt werden, so dass lediglich durch Austausch dieses einen Bauteils jeweils unterschiedliche Freiwege für verschiedene Fahrzeughersteller einfach und kostengünstig bereitgestellt werden können. Alternativ kann auch jeweils eine Startposition (Ruheposition) des Schneckenrads verändert werden, so dass sich der Abstand zwischen dem Anschlag 7 und dem Federende 19 ändert.

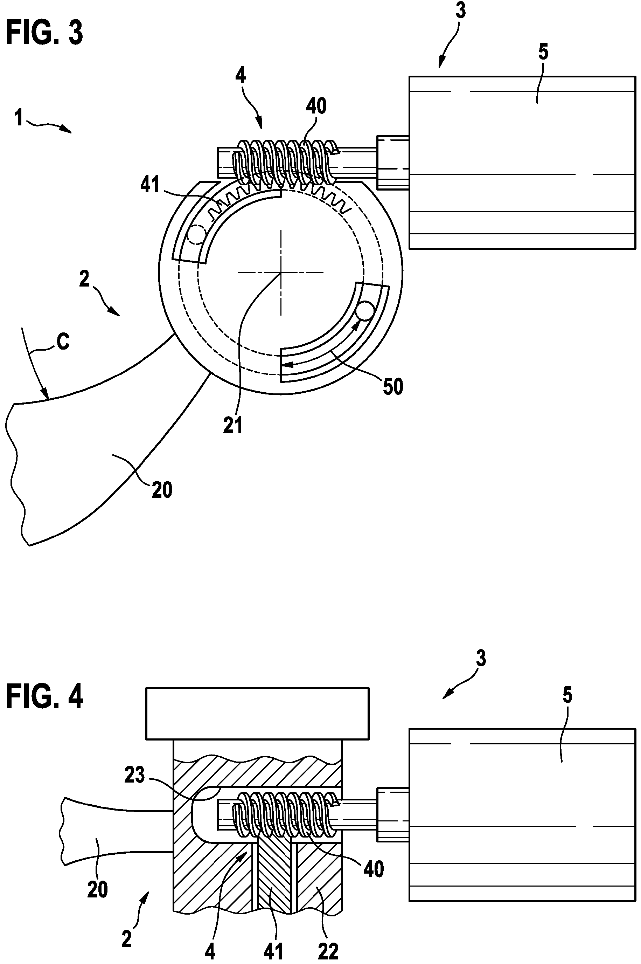

Die Figuren 3 und 4 zeigen ein aktives Fahrpedal 1 gemäß einem zweiten Ausführungsbeispiel der Erfindung. Bei diesem Ausführungsbeispiel ist ebenfalls ein Freiweg 50 zwischen der Pedaleinheit 2 und der Aktuatoreinheit 3 vorgesehen. Wie beim ersten Ausführungsbeispiel muss bis zur Erzeugung der Gegenkraft zuerst der Freiweg 50 überwunden werden. Erst dann wird die Gegenkraft aufgebaut.

Weiterhin ist in einem Gehäuse der Pedaleinheit 2 ein Fenster 23 vorgesehen. Das Fenster 23 dient dabei dazu, dass eine Schnecke mit einem im Inneren des Gehäuses angeordneten Schneckenrad 41 kämmen kann. Hierdurch wird ein besonders kompakter Aufbau erreicht. Weiterhin können durch die Idee des Vorsehens eines Gehäuses 22 mit einem Fenster 23 auch für verschiedene Hersteller unterschiedliche Gehäuse 22 mit unterschiedlichen Positionen der Fenster 23 vorgesehen werden, so dass jeweils der Antrieb 5 an einer in Umfangsrichtung anderen Position angeordnet sein kann. Hierdurch kann ebenfalls unterschiedliche Layout-Anforderungen bzw. Bauraumbeschränkungen verschiedenster Fahrzeughersteller reagiert werden. Das Gehäuse 22 ist vorzugsweise ein Spritzgussteil.

Nachfolgend wird unter Bezugnahme auf Figur 5 ein aktives Fahrpedal 1 gemäß einem dritten bevorzugten Ausführungsbeispiel der Erfindung im Detail beschrieben.

Wie aus Figur 5 ersichtlich ist, umfasst das aktive Fahrpedal 1 eine Pedaleinheit 2 und eine Aktuatoreinheit 3. Die Abgrenzung zwischen der Pedaleinheit 2 und der Aktuatoreinheit 3 wird durch einen ersten Anschlag 6 der Pedaleinheit und einen zweiten Anschlag 7 der Aktuatoreinheit definiert.

Die Pedaleinheit 2 umfasst ein Pedal 20, welches mittels eines Fußes 24 betätigbar ist. Das Pedal 20 ist um eine Schwenkachse 21 schwenkbar. In diesem Ausführungsbeispiel ist ein stehendes Pedal dargestellt, es kann jedoch auch ein hängendes Pedal verwendet werden. Das Pedal 20 ist über eine Gestängeanordnung 9 mit einem ersten und zweiten Rückstellelement 11, 12 (aus Sicherheitsgründen redundant ausgeführt) verbunden. Ein maximaler Pedalweg 15 ist zwischen einem Leerlaufanschlag 13 und einem Volllastanschlag 14 definiert (vergleiche Figur 5).

Ein erster Wegsensor 16 erfasst eine Position des Pedals 20 über einen Verfahrweg der Gestängeanordnung 9.

Die Aktuatoreinheit 3 umfasst einen elektrischen Antrieb 5 und ein Schneckengetriebe 4. Das Schneckengetriebe ist einstufig ausgebildet und weist eine vorbestimmte Selbsthemmung auf. Das Schneckengetriebe 4 umfasst eine Schnecke 40 und ein angetriebenes Schneckenelement 41, welches in Figur 5 nur schematisch als Zahnstange dargestellt ist. Am angetriebenen Schneckenelement 41 ist ein zweiter Anschlag 7 angeordnet. Der erste Anschlag 6 ist an der Gestängeanordnung 9 angeordnet. Ein zweiter Wegsensor 17 bestimmt eine Position des Schneckenelements 41.

Im normalen Betrieb betätigt ein Fahrer mit seinem Fuß 24 das Pedal 20, so dass abhängig vom Pedalweg bzw. der Pedalstellung, welche mittels des ersten Wegsensors 16 erfassbar ist, eine Steuereinheit 10 einen Antrieb des Fahrzeugs steuert. Die Aktuatoreinheit 3 befindet sich dabei in einem nicht aktivierten Zustand, vollständig zurückgezogen, so dass der erste Anschlag 6 der Pedaleinheit 2 nicht mit dem zweiten Anschlag 7 der Aktuatoreinheit 3 in Kontakt kommen kann.

Wenn nun ein aktives Fahrpedal gewünscht wird, beispielsweise in einer Kraftstoffsparstellung für das Fahrzeug, wird über die Steuereinheit 10 der elektrische Antrieb 5 betätigt (Pfeil A), so dass der zweite Anschlag 7 über das Schneckengetriebe 4 in Richtung des Pfeils B bewegt wird. Sobald der erste Anschlag 6 mit dem zweiten Anschlag 7 in Kontakt kommt, wird eine Gegenkraft erzeugt, welche der Fahrer bewusst am Pedal 20 wahrnimmt. Zur Dämpfung des Kontaktes ist zwischen dem ersten Anschlag 6 und dem zweiten Anschlag 7 ein Elastomerelement 8 vorgesehen. Die erzeugte Gegenkraft liegt beispielsweise in einem Bereich von 10 bis 15 N.

Der Fahrer kann dann das Pedal 20 nur so weit durchdrücken (Pfeil C), bis die Gestängeanordnung 9 so weit verfahren ist (Pfeil D), so dass der Anschlag 6 mit dem Anschlag 7 in Kontakt kommt. Wenn der Fahrer stärker auf das Pedal drückt, wird die Selbsthemmung des Schneckengetriebes 4 überwunden, so dass der Anschlag 6 das Schneckenrad 41 in Richtung entgegen der Bewegungsrichtung B und entgegen der aufgebrachten Gegenkraft bewegt.

Es sei angemerkt, dass die Aktuatoreinheit 3 nur in die Richtung des Pfeils B wirkt, so dass die Aktuatoreinheit nicht beschleunigend wirken kann, sondern das Pedal 20 nur in Richtung der Leerlaufposition mit einer Kraft beaufschlagen kann.

## Patentansprüche

1. Aktives Fahrpedal eines Fahrzeugs, umfassend
- eine Pedaleinheit (2) mit einem an einer Schwenkachse (21) schwenkbar angeordneten Pedal (20), und
- eine Aktuatoreinheit (3) mit einem elektrischen Antrieb (5),
- wobei die Aktuatoreinheit (3) eingerichtet ist, einer auf das Pedal (20) ausgeübten Pedalkraft eine Gegenkraft entgegenzusetzen, und
- wobei ein Freiweg (50) zwischen der Aktuatoreinheit (3) und der Pedaleinheit (2) vorhanden ist, wobei die Gegenkraft erst nach Zurücklegen des Freiwegs (50) der Pedalkraft entgegensetzbar ist, wobei die Aktuatoreinheit (3) ferner ein Getriebe umfasst, welches zwischen dem elektrischen Antrieb (5) und der Pedaleinheit (2) angeordnet ist, **dadurch gekennzeichnet, dass** das Getriebe ein Schneckengetriebe mit einer Schnecke (40) und einem angetriebenen Schneckenelement (41) ist.

2. Fahrpedal nach Anspruch 1, ferner umfassend einen ersten Wegsensor (16) und einen zweiten Wegsensor (17), wobei der erste Wegsensor (16) eine Position eines bewegbaren Bauteils der Aktuatoreinheit (3) erfasst und der zweite Wegsensor (17) eine Position des Pedals (20) erfasst.

3. Fahrpedal nach einem der Ansprüche 1 oder 2, **dadurch gekennzeichnet, dass** das Schneckengetriebe einstufig mit genau einer Schnecke (40) und genau einem angetriebenen Schneckenelement (41) ausgebildet ist.

4. Fahrpedal nacheinem der vorhergehenden Ansprüche, **dadurch gekennzeichnet, dass** das angetriebene Schneckenelement ein Schneckenrad ist und eine Schwenkachse (21) des Pedals (20) und eine Mittelachse des Schneckenrads zusammenfallen.

5. Fahrpedal nach einem der vorhergehenden Ansprüche, ferner umfassend ein Federelement (18), welches in Wirkverbindung zwischen der Pedaleinheit (2) und der Aktuatoreinheit (3) ist.

6. Fahrpedal nach Anspruch 5, **dadurch gekennzeichnet, dass** das Federelement eine Druckfeder oder eine Torsionsfeder ist.

7. Fahrpedal nach einem der Ansprüche 5 oder 6, **dadurch gekennzeichnet, dass** das Federelement (18) ein Federende (19) umfasst, welches nach Zurücklegen des Freiwegs eine Kopplung zwischen der Pedaleinheit (2) und der Aktuatoreinheit (3) bereitstellt.

8. Fahrpedal nach einem der vorhergehenden Ansprüche, **dadurch gekennzeichnet, dass** eine Länge des Freiweges (50) einstellbar ist, insbesondere durch Änderung einer Startposition oder durch Vorsehen unterschiedlich langer Langlöcher oder Ausnehmungen.

9. Fahrpedal nach einem der vorhergehenden Ansprüche, **dadurch gekennzeichnet, dass** das angetriebene Schneckenelement (41) in einem Gehäuse (22) der Pedaleinheit (2) angeordnet ist und das Gehäuse (22) ein Fenster (23) aufweist, durch welches die Schnecke (40) in das angetriebene Schneckenelement (41) eingreift.

10. Fahrpedal nach einem der vorhergehenden Ansprüche, ferner umfassend eine Steuereinheit (10) zur Betätigung der Aktuatoreinheit (3), wobei die Aktuatoreinheit (3) eingerichtet ist, basierend auf Signalen der Steuereinheit (10), einer auf das Pedal (20) ausgeübten Pedalkraft eine Gegenkraft entgegenzusetzen.

## Claims

1. Active accelerator pedal of a vehicle, comprising
- a pedal unit (2) with a pedal (20) which is arranged so as to be pivotable at a pivoting axis (21), and
- an actuator unit (3) with an electric drive (5),
- wherein the actuator unit (3) is configured to apply an opposing force to a pedal force which is exerted on the pedal (20), and
- there is free travel (50) between the actuator unit (3) and the pedal unit (2), wherein the opposing force cannot be applied to the pedal force until after the free travel (50) has been travelled through, wherein the actuator unit (3) also comprises a transmission mechanism which is arranged between the electric drive (5) and the pedal unit (2),
**characterized in that**
the transmission is a worm gear with a worm (40) and a driven worm element (41).

2. Accelerator pedal according to Claim 1, also comprising a first travel sensor (16) and a second travel sensor (17), wherein the first travel sensor (16) senses a position of a movable component of the actuator unit (3), and the second travel sensor (17) senses a position of the pedal (20).

3. Accelerator pedal accordig to one of Claims 1 and 2, **characterized in that** the worm gear is embodied in a single stage with precisely one worm (40) and precisely one driven worm element (41).

4. Accelerator pedal according to one of the preceding claims, **characterized in that** the driven worm element is a worm gear, and a pivoting axis (21) of the pedal (20) and a central axis of the worm gear coincide.

5. Accelerator pedal according to one of the preceding claims, also comprising a spring element (18) which is operatively connected between the pedal unit (2) and the actuator unit (3).

6. Accelerator pedal according to Claim 5, **characterized in that** the spring element is a compression spring or a torsion spring.

7. Accelerator pedal according to one of Claims 5 and 6, **characterized in that** the spring element (18) comprises a spring end (19) which, after travelling through the free travel, makes available a coupling between the pedal unit (2) and the actuator unit (3) .

8. Accelerator pedal according to one of the preceding claims, **characterized in that** a length of the free travel (50) can be set, in particular by changing a starting position or by providing elongate holes or recesses of different lengths.

9. Accelerator pedal according to one of the preceding claims, **characterized in that** the driven worm element (41) is arranged in a housing (22) of the pedal unit (2), and the housing (22) has a window (23) through which the worm (40) engages in the driven worm element (41).

10. Accelerator pedal according to one of the preceding claims, also comprising a control unit (10) for activating the actuator unit (3), wherein the actuator unit (3) is configured to apply, on the basis of signals of the control unit (10), an opposing force to the pedal force which is exerted on the pedal (20).

## Revendications

1. Pédale d'accélérateur active d'un véhicule, comprenant
- une unité de pédale (2) munie d'une pédale (20) montée pivotante sur un axe de pivotement (21), et
- une unité d'actionneur (3) munie d'un entraînement électrique (5),
- l'unité d'actionnement (3) étant aménagée pour opposer une force antagoniste à une force de pédale exercée sur la pédale (20), et
- un trajet libre (50) étant présent entre l'unité d'actionnement (3) et l'unité de pédale (2), la force antagoniste ne pouvant être opposée à la force de pédale qu'une fois le trajet libre (50) parcouru, l'unité d'actionnement (3) comprenant en outre un engrenage disposé entre l'entraînement électrique (5) et l'unité de pédale (2),
**caractérisée en ce que** l'engrenage est un engrenage à vis sans fin avec une vis sans fin (40) et un élément de vis sans fin entraîné (41).

2. Pédale d'accélérateur selon la revendication 1, comprenant en outre un premier capteur de position (16) et un deuxième capteur de position (17), le premier capteur de position (16) détectant une position d'un composant mobile de l'unité d'actionnement (3) et le deuxième capteur de position (17) détectant une position de la pédale (20).

3. Pédale d'accélérateur selon l'une quelconque des revendications 1 et 2, **caractérisée en ce que** l'engrenage à vis sans fin est réalisé à un seul étage avec exactement une vis sans fin (40) et exactement un élément de vis sans fin entraîné (41).

4. Pédale d'accélérateur selon l'une quelconque des revendications précédentes, **caractérisée en ce que** l'élément de vis sans fin entraîné est une roue hélicoïdale, et un axe de pivotement (21) de la pédale (20) et un axe central de la roue hélicoïdale coïncident.

5. Pédale d'accélérateur selon l'une quelconque des revendications précédentes, comprenant en outre un élément faisant ressort (18) qui se trouve en liaison active entre l'unité de pédale (2) et l'unité d'actionnement (3).

6. Pédale d'accélérateur selon la revendication 5, **caractérisée en ce que** l'élément faisant ressort est un ressort de pression ou un ressort à torsion.

7. Pédale d'accélérateur selon l'une quelconque des revendications 5 ou 6, **caractérisée en ce que** l'élément faisant ressort (18) comprend une extrémité de ressort (19) assurant un couplage entre l'unité de pédale (2) et l'unité d'actionnement (3) une fois le trajet libre parcouru.

8. Pédale d'accélérateur selon l'une quelconque des revendications précédentes, **caractérisée en ce qu'**une longueur du trajet libre (50) est réglable, en particulier par la modification d'une position initiale ou par la fourniture de trous oblongs ou d'évidements de longueurs différentes.

9. Pédale d'accélérateur selon l'une quelconque des revendications précédentes, **caractérisée en ce que** l'élément de vis sans fin entraîné (41) est disposé dans un boîtier (22) de l'unité de pédale (2) et le boîtier (22) présente une ouverture (23) par laquelle la vis sans fin (40) vient en prise avec l'élément de vis sans fin entraîné.

10. Pédale d'accélérateur selon l'une quelconque des revendications précédentes, comprenant en outre une unité de commande (10) pour actionner l'unité d'actionnement (3), l'unité d'actionnement (3) étant aménagée pour opposer une force antagoniste à une force de pédale exercée sur la pédale (20) sur la base de signaux provenant de l'unité de commande (10).
